# EUROPEAN PATENT APPLICATION

(11) **EP 4 711 097 A1**
(43) Date of publication of application: **18.03.2026**
(21) Application number: 25200352.0
(22) Date of filing: 04.09.2025
(51) Int. Cl.: B25J 9/16

(54) **ROBOT LEARNING THROUGH RETRIEVAL AND SELF IMPROVEMENT**

(30) Priority: 13.09.2024 US 202463694558 P
(71) Applicant: GDM Holding LLC, Mountain View CA 94043 (US)
(72) Inventor: AMOR, Heni Ben, Tempe (US); SANKETI, Pannag R., Fremont (US); GRAESSER, Laura Harding, Montreal (CA); ABEYRUWAN, Saminda Wishwajith, Sunnyvale (US); D'AMBROSIO, David B., Atlanta (US); ISCEN, Atil, Mountain View (US)
(74) Representative: Thorniley, Peter

(57) **Abstract**

Implementations are provided for an interactive machine learning methodology that allows non-expert users to use natural language to teach new skills, particularly to robots, through language grounding and understanding. In various implementations, a plurality of natural language summaries may be retrieved. Each of the natural language summaries may describe details of robotic performance of a task, and may include, or be usable to retrieve, a corresponding set of reference modulation values. A set of modulation values corresponding to a natural language request may be generated based on the plurality of natural language summaries. The natural language request may specify one or more constraints on robotic performance of the task. A robot control signal may be generated based on the generated set of modulation values.

## Description

### Background

Many machine learning frameworks allow for human involvement before learning starts. A human may provide expert training data, specify cost and/or reward functions, or identify initial parameter settings. Once learning is underway, human involvement may no longer be feasible and may even be disruptive. This runs counter to modern pedagogical methodologies and teaching styles for animals and humans. In addition, it is often the case that a single machine learning paradigm, such as imitation learning, reinforcement learning, self-supervised learning, *etc.,* is used to train a new model. Combining and/or transitioning between multiple learning paradigms can be difficult. Furthermore, supervising machine learning model training often requires deep technical expertise and the ability to transform intuitive concepts of motions and actions into formal mathematical descriptions and algorithms.

### Summary

Controlling robotic systems to perform complex tasks often involves a combination of pre-programmed motions and adaptive policies. A base control policy, which may be implemented using a machine learning model, can generate foundational robot control data, such as joint velocities, to execute a given task. However, such base policies may produce generic or undifferentiated behaviors. To achieve more nuanced or specific performance, these base policies can be modulated.

One approach for modulating a base policy involves applying a set of modulation values, sometimes referred to as residual policy parameters. These values can adjust the output of the base policy, for example, by attenuating or amplifying certain generated joint velocities. By changing the set of modulation values, the robot's resulting behavior can be altered to meet different constraints or objectives, such as changing the speed, trajectory, or force of a movement.

A significant challenge in this paradigm is determining the appropriate set of modulation values to achieve a desired outcome, particularly when the desired outcome is specified by a human user in natural language. The relationship between a given set of numeric modulation values and the resulting physical behavior of the robot is often non-obvious and difficult for a human to predict. A user may describe a desired outcome, such as "hit the ball to the left side of the table," but translating this high-level, semantic request into a concrete set of numerical modulation values that will produce that specific behavior presents a technical problem.

Existing systems do not provide an effective way to bridge this gap between a high-level natural language instruction and the low-level control parameters needed to execute it. Manually tuning these parameters is often an inefficient and iterative process of trial and error, requiring significant expertise and time. There is no clear method for a system to autonomously understand a natural language request, analyze previous robot performances, and then determine or generate a new set of modulation values to satisfy the user's request. This deficiency limits the ability of users to intuitively and effectively direct robot behavior for specialized tasks.

Disclosed herein are systems and methods for enabling intuitive, natural language-based control of robotic systems. In some implementations, a technical advantage is achieved by providing an improved methodology for translating high-level, semantic user requests into low-level robotic control parameters. This allows a user, who may not have technical expertise, to guide and refine a robot's behavior during task performance using natural language. The disclosed subject matter addresses the technical problem of bridging the semantic gap between a human user's intent and the numerical modulation values that govern a robot's actions.

In one aspect, a computer-implemented method provides for generating a robot control signal that corresponds to a user's natural language request. The method involves retrieving a plurality of natural language summaries, where each summary describes a prior instance of robotic task performance. Each natural language summary is associated with a corresponding set of reference modulation values that were used during that prior performance. From this plurality of summaries, a set of modulation values is generated that corresponds to the new natural language request, which specifies one or more constraints on how the robot should perform the task. Finally, a robot control signal is generated based on this generated set of modulation values. For example, the generated modulation values can be used to modulate the output of a base robot control data machine learning model, such as by attenuating joint velocities, to produce the desired robot behavior.

In another aspect, a method involves using one or more generative models to create the natural language summaries from raw performance data. This method includes assembling a summary input prompt that contains data from a plurality of recorded robot execution traces. Each trace includes a set of reference modulation values that were implemented during the robot's performance of the task. This prompt is processed by one or more generative models to produce a plurality of natural language summaries of the execution traces, with each summary linked to its corresponding set of modulation values. The method then proceeds to generate a new set of modulation values based on a natural language request and the newly generated summaries, and subsequently generates a robot control signal.

Further aspects of the disclosed subject matter provide for analysis and synthesis capabilities to improve robot performance over time. An analysis process may involve processing the natural language summaries and their associated modulation values to identify relationships between specific values and the described robot behaviors. Following this analysis, a synthesis process can generate new, synthetic modulation values designed to better fulfill a user's natural language request. These synthetic values can then be used to control the robot or be added to the library of examples for future retrieval, enabling a form of iterative self-improvement. These methods may be applied to various robotic tasks, including, for example, racket sports, object manipulation, and human-robot interaction.

Implementations are described herein relating to an intuitive and interactive learning methodology that enables a human teacher-who need not be an expert-to provide feedback, refinements, rewards, and/or demonstrations whenever needed during a machine learning training process. More particularly, but not exclusively, implementations are described herein for an interactive machine learning methodology that allows non-expert users to use natural language to teach new skills, particularly to robots, through language grounding and understanding.

In some implementations, a computer implemented method may be provided that includes: retrieving a plurality of natural language summaries, wherein each of the natural language summaries describes details of robotic performance of a task, and wherein each natural language summary includes, or is usable to retrieve, a corresponding set of reference modulation values; generating a set of modulation values corresponding to a natural language request based on the plurality of natural language summaries, wherein the natural language request specifies one or more constraints on robotic performance of the task; and generating a robot control signal based on the generated set of modulation values.

In various implementations, generating the set of modulation values corresponding to the natural language request may include: comparing the natural language summaries to the natural language request; and based on the comparing, retrieving one of the sets of reference modulation values. In various implementations, the comparing may include: assembling, as a retrieval input prompt, the plurality of natural language summaries and the natural language request; and processing the retrieval input prompt using one or more generative models to generate retrieval generative output, wherein the retrieval generative output includes, or is usable to retrieve, the set of reference modulation values.

In various implementations, the control signal may be generated by modulating output generated using a robot control data machine learning model using the retrieved set of modulation values to generate robot control data. In various implementations, the control signal may be generated by attenuating one or more joint velocities generated by a robot control data machine learning model based on the modulation values.

In various implementations, the robot control data may include a plurality of joint velocities. In various implementations, the sets of reference modulation values may include sets of residual policy parameters.

In various implementations, the retrieved set of reference modulation values may correspond to the natural language summary of the plurality of natural language summaries that is most semantically similar to the natural language request. In various implementations, the retrieved set of reference modulation values may correspond to the natural language summary of the plurality of natural language summaries that is most syntactically similar to the natural language request. In various implementations, one or more of the natural language summaries may describe a robot execution trace that was recorded during robotic performance of the task.

In various implementations, one or more of the sets of reference modulation values were implemented and recorded during robotic performance of the task. In various implementations, one or more of the sets of reference modulation values may include synthetic modulation values that were generated using one or more of the generative models. In various implementations, the generating may include generating the set of reference modulation values using one or more of the generative models.

In various implementations, the method may include operating a robot based on the robot control signal. In various implementations, the robot may be a physical robot or a virtual robot in a simulated environment.

In another aspect, a method may be implemented using one or more processors and may include: assembling, as a summary input prompt, data indicative of a plurality of robot execution traces recorded during robotic performance of a task, wherein each robot execution trace includes a corresponding set of reference modulation values implemented during robotic performance of the task; processing the summary input prompt using one or more generative models to generate summary generative model output that includes a plurality of natural language summaries of the plurality of robot execution traces, wherein each natural language summary of the plurality of natural language summaries describes details of robotic performance of the task and includes, or is usable to retrieve, the corresponding set of reference modulation values; generating a set of modulation values corresponding to a natural language request based on the plurality of natural language summaries, wherein the natural language request specifies one or more constraints on robotic performance of the task; and generating a robot control signal based on the generated set of modulation values.

In various implementations, the method may include operating a physical robot or a visual robot in a simulated environment based on the robot control signal. In various implementations, the generating may include: assembling, as a retrieval input prompt, the plurality of natural language summaries and the natural language request; and processing the retrieval input prompt using one or more generative models to generate retrieval generative output, wherein the retrieval generative output includes, or is usable to retrieve, the set of reference modulation values.

In various implementations, the method may include: assembling, as an analysis input prompt, the plurality of natural language summaries and corresponding sets of reference modulation values; and processing the analysis input prompt using one or more of the generative models to generate analysis generative output, wherein the analysis generative output includes data indicative of one or more relationships between at least some of the reference modulation values and the details described in one or more of the natural language summaries.

In various implementations, the method may include: assembling, as a synthesis input prompt, the analysis generative output, the same natural language request or a different natural language request, and a request to generate one or more sets of synthetic modulation values; and processing the synthesis input prompt using one or more of the generative models to generate synthesis generative output, wherein the synthesis generative output includes one or more sets of synthetic modulation values.

In another aspect, a method may be implemented using one or more processors and may include: assembling, as a summary input prompt, data indicative of a plurality of robot execution traces recorded during robotic performance of a task, wherein each robot execution trace includes a corresponding set of reference modulation values implemented during robotic performance of the task; processing the summary input prompt using one or more generative models to generate summary generative model output that includes a plurality of natural language summaries of the plurality of robot execution traces, wherein each natural language summary of the plurality of natural language summaries describes details of robotic performance of the task and includes, or is usable to retrieve, the corresponding set of reference modulation values; assembling, as an analysis input prompt, the plurality of natural language summaries and corresponding sets of reference modulation values; and processing the analysis input prompt using one or more of the generative models to generate analysis generative output, wherein the analysis generative output includes data indicative of one or more relationships between at least some of the reference modulation values and the details described in one or more of the natural language summaries.

In various implementations, the method may include: assembling, as a synthesis input prompt, the analysis generative output, a natural language request, and a request to generate one or more sets of synthetic modulation values, wherein the natural language request specifies one or more constraints on robotic performance of the task; and processing the synthesis input prompt using one or more of the generative models to generate synthesis generative output, wherein the synthesis generative output includes one or more sets of synthetic modulation values.

In various implementations, the task may be a racket sport involving a robot and one or more other co-participants. In various implementations, the racket sport may be table tennis. In other implementations, the task may be locomotion, manipulation of one or more objects, interacting with one or more humans, and/or throwing or catching an object.

In various implementations, the given natural language summary may be the most closely aligned with the natural language request. In various implementations, the reference modulation values may include residual policy parameters.

In another aspect, a method may be implemented using one or more processors and may include: assembling, as an input prompt, data indicative of: a plurality of robot execution traces recorded during robotic performance of a task, wherein each robot execution trace includes a corresponding set of reference modulation values implemented during robotic performance of the task, a domain description of the domain in which the task is performed, a natural language request that specifies one or more constraints on robotic performance of the task, a request to summarize the plurality of robot execution traces as a plurality of natural language summaries, wherein each natural language summary includes, or is usable to retrieve, a corresponding set of reference modulation values, a request to retrieve the modulation values that would result in the one or more constraints being satisfied, a request to analyze the natural language summaries and retrieved modulation values, and to analyze one or more effects of one or more of the modulation values, and a request to propose synthetic modulation values that satisfy the one or more constraints; processing the input prompt using one or more generative models to generate generative output that includes data indicative of the requested synthetic modulation values; and generating a robot control signal based on the requested synthetic modulation values.

In various implementations, the generating may include modulating output generated by a robot control data generation model based on the synthetic modulation values.

Other implementations may include a non-transitory computer readable storage medium storing instructions executable by a processor to perform a method such as one or more of the methods described above. Yet another implementation may include a control system including memory and one or more processors operable to execute instructions, stored in the memory, to implement one or more modules or engines that, alone or collectively, perform a method such as one or more of the methods described above.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

Fig. 1 schematically depicts an example environment in which disclosed techniques may be employed, in accordance with various implementations.
Fig. 2 depicts an example robot, in accordance with various implementations.
Fig. 3 depicts an example of a robot execution trace.
Fig. 4A and Fig. 4B schematically depict examples of how various components depicted in Fig. 1 may cooperate to carry out selected aspects of the present disclosure during summarization and retrieval phases.
Fig. 5 schematically depicts an example of how various components depicted in Fig. 1 may cooperate to carry out selected aspects of the present disclosure during analysis and synthesis phases.
Fig. 6 depicts an example method for practicing selected aspects of the present disclosure during a summarization phase.
Fig. 7 depicts another example method for practicing selected aspects of the present disclosure during a retrieval phase.
Fig. 8 depicts another example method for practicing selected aspects of the present disclosure during analysis and synthesis phases.
Fig. 9 schematically depicts an example architecture of a computer system.

### Detailed Description

Implementations are described for an intuitive and interactive learning methodology that enables a human teacher-who need not be an expert-to provide feedback, refinements, rewards, and/or demonstrations whenever needed during a machine learning training process. More particularly, but not exclusively, implementations are described for an interactive machine learning methodology that allows non-expert users to use natural language to teach new skills, particularly to robots, through language grounding and understanding.

At a high level, in various implementations, a generative model may be used to process (1) traces of robot behavior, (2) a description of the domain in which the robot operates (*e.g*., a spatial description of the robot's environment), and (3) objectives (*e.g*., expressed in natural language) of a human user. One or more input prompts may be assembled to include this data, and the generative model may be iteratively applied, with the input prompt being updated (and the context window size increasing) at each turn. The result of this iterative application is to optimize parameters of a residual policy by retrieving previous examples that best fit the objectives and then synthesizing a new set of parameters in order to gradually improve robot behavior.

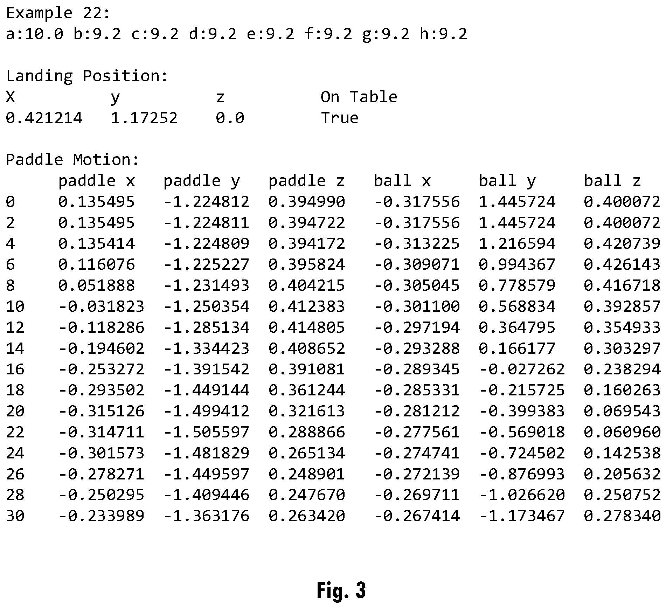

In various implementations, a system configured with selected aspects of the present disclosure may be provided with a cache of previous robot trials in the form of execution traces - a tabular sequence of robot states (detailed in Fig. 3) which were observed during rollout. In turn, the generative model may be used to process this data to generate improved robot control parameters, e.g., attenuation values, that will bring the robot behavior closer to the objective(s) specified by a human user. Instead of reward or fitness functions, objectives are expressed in natural language, making the process more accessible to non-experts. Using its ability to process natural language and numerical data, the generative model can identify ("retrieve") previous robot parameters that are in line with the human-stated objectives. In addition to this retrieval process, the generative model may be used to analyze the impact of the individual control parameters/attentional values on task performance and synthesize a new set of control parameters to improve robot performance. The result is an iterative process which progressively generates improved control parameters. One technical advantage of techniques described herein is the explainability of individual learning steps, since the generative model can be prompted to provide natural language justifications for all parameter choices.

In some implementations, during a "summarization" phase, a generative model such as a large language model (LLM) may be used to summarize examples of robot behavior (*e.g*., robot execution traces) provided to the LLM in-context to generate natural language summaries. In various implementations, the natural language summaries may include, or be usable to retrieve, corresponding inputs, or "reference modulation values" (also referred to herein as "attenuation values"), that were implemented during robot performance of a task. For example, the reference modulation values may have been used to modulate operation of a lower level control that utilizes a robot control data machine learning model and/or to weight robot control values (*e.g*., joint velocities) generated using the robot control data machine learning model. These natural language summaries and corresponding reference modulation values may then be used for various purposes.

During inference, also referred to herein as a "retrieval" phase, the natural language summaries, and particularly their corresponding reference modulation values, may be retrieved and/or used to modulate, attenuate, or otherwise influence a robot's performance of a task to comport with intervening human instruction(s). While a robot performs a task, a human may provide (*e.g.,* type or speak) a natural language request that includes one or more constraints on how the task should be performed. As a working example, suppose a robot is playing table tennis and is about to return an incoming ball. A human "coach" or "teacher" that is guiding the robot to play better table tennis may provide a natural language request such as "hit the ball towards the back of the table on the right side."

This natural language request may be compared to the natural language summaries to identify the natural language summary that is the most closely aligned with (*e.g.,* the most semantically and/or syntactically similar to) the natural language request. In some implementations, the natural language request and summaries may be assembled into a "retrieval" input prompt along with a command to determine which summary is most closely aligned semantically or syntactically with the request. The input prompt may be processed using one or more generative models to generate "retrieval" generative output. The retrieval generative output may indicate (i) which natural language summary is most closely aligned with the natural language request, and/or (ii) the reference modulation values corresponding to that identified natural language summary.

Those reference modulation values may then be used to modulate how a lower level controller causes a robot to perform a task. In some implementations, for example, the reference modulation values may be residual policy parameters that are used to modulate output of a "base" model (*e.g.,* a robot control data machine learning model) used by the lower level controller to generate modulated robot control data. For example, the residual policy parameters may be used by the lower level controller to modulate application of the base robot control data generation model and/or to attenuate outputs (*e.g*., joint velocities) generated using the based robot control data policy. This modulated robot control data may cause a robot to perform the task in a manner that is more closely aligned with constraint(s) contained in a natural language request provided by a human.

Without these modulation values, on the other hand, the lower level controller may be able to perform rudimentary tasks such as hitting an incoming table tennis ball, but not with regard to any human guidance. For example a lower level controller may not be able to reliably land a table tennis shot on the table, target a specific landing location, or interpret a natural language instruction. Accordingly, these modulation values may be used to capture human influence and/or coaching to attenuate the lower level controller's behavior.

In another aspect, the natural language summaries describing robot behavior may be used as part of a self-improvement process. This self-improvement process may include an "analysis" phase in which the natural language summaries and corresponding reference modulation value(s) are analyzed for relationships between the reference modulation value(s) and aspects of robot engagement with an environment. For instance, in some implementations, the natural language summaries may be assembled into an "analysis" input prompt that also includes a natural language request (*e.g*., "hit the ball to the right side") that provides constraint(s) on robot performance of a task. In some implementations, the analysis input prompt may also include at least some data from the underlying robot execution traces that are described by (and were used to generate) the natural language summaries. The analysis input prompt may also include command(s) to identify which modulation values are most influential in comporting with the constraint(s) stated by the natural language request, and/or a request to analyze the effect(s) of particular modulation values on various aspects of robot engagement with the environment. The analysis input prompt may be processed using one or more generative models to generate analysis output that indicates one or more relationships between modulation parameters and interaction(s) between robot(s) and environment(s). In the table tennis working example, for instance, the analysis output might be something like the following:

*Decreasing modulation value B seems to correlate with the ball landing further to the right. The A modulation value does show a clear influence on the landing position within the given range. Paddle motion remains largely consistent across examples, with slight variations in backward and upward movement.*

The self-improvement process may also include a "synthesis" phase in which synthetic modulation values are generated using the generative model(s) to be more closely aligned with constraint(s) set forth in natural language requests. During this synthesis phase, the relationship(s) determined based on the analysis input prompt may be used to generate synthetic modulation values that are even more closely aligned with various natural language requests than those previously-recorded reference modulation values. For example, in various implementations, a "synthesis" input prompt may be assembled to include data indicative of the relationship(s) determined from the analysis input prompt (*e.g*., the example analysis output set forth above), the same natural language request (*e.g*., "hit the ball to the right side") that was assembled into the analysis input prompt, and a command to propose new (*i.e.* synthetic) modulation values that will bring the state of the robot and/or its environment more closely into alignment with constraint(s) specified in the natural language request.

In various implementations, these synthetic modulation values may then be preserved, *e.g.,* as new reference modulation values (which may also be paired with natural language descriptions) that can be retrieved during the retrieval phase described previously to modulate robot performance of a task. In this manner, the robot "learns" (or is "coached") how to better perform a task over time. Additionally or alternatively, in some implementations, synthetic modulation values may be generated on the fly and used during the retrieval phase.

Generative model(s) described herein may take various forms, including, but not limited to, model(s) such as Gemini, Flamingo, PaLM, BERT, LaMDA, Meena, and/or any other single-modal or multimodal generative model, such as any other generative model that is encoder-only based, decoder-only based, sequence-to-sequence based and that optionally includes an attention mechanism or other memory, diffusion model(s), *etc.* Generative models may have hundreds of millions, or even hundreds of billions of parameters. In some implementations, generative models may include multi-modal models such as a vision language model (VLM) and/or a visual question answering (VQA) model, which can have any of the aforementioned architectures, and which can be used to process multiple modalities of data, particularly images and text, and/or images and audio for example, to generate one or more modalities of output.

While many examples described herein relate to robots playing racket sports, this is not meant to be limiting. Techniques described herein may be more broadly applicable to any number of scenarios in which a robot engages in various activities, such as general locomotion, manipulation by robots of objects, interaction by a robot with one or more humans or other robots, interaction by a robot with a dynamic environment, and so forth.

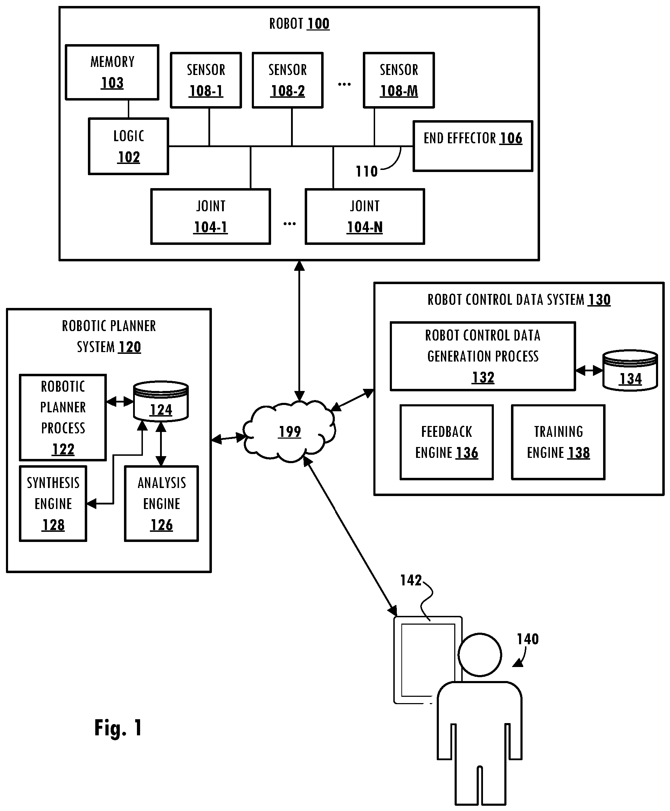

Fig. 1 is a schematic diagram depicting components that can cooperate to carry out selected aspects of the present disclosure, in accordance with various implementations. The various components depicted in Fig. 1, particularly those components forming a robotic planner system 120 and robot control data system 130, may be implemented using any combination of hardware and software. A robot 100 may be in communication with systems 120 and/or 130 and/or all or parts of systems 120 and/or 130 may be implemented onboard robot 100. The components of Fig. 1 may be communicatively coupled with each other via one or more networks 199, which may include one or more personal area networks, local area networks, and/or wide area networks (*e.g*., the Internet).

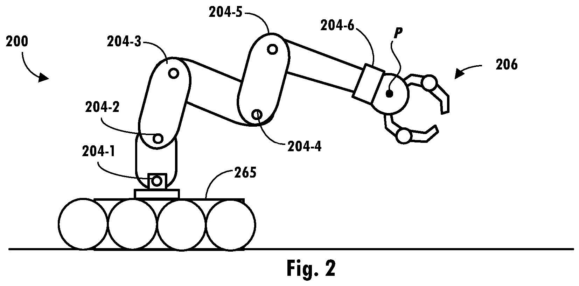

Robot 100 may take various forms, including but not limited to a telepresence robot (*e.g.,* which may be as simple as a wheeled vehicle equipped with a display and a camera), a robot arm, a multi-pedal robot such as a "robot dog," an aquatic robot, a wheeled device, a submersible vehicle, an unmanned aerial vehicle ("UAV"), and so forth. One non-limiting example of a mobile robot arm is depicted in Fig. 2. In various implementations, robot 100 may include logic 102. Logic 102 may take various forms, such as a real time controller, one or more processors, one or more field-programmable gate arrays ("FPGA"), one or more application-specific integrated circuits ("ASIC"), and so forth. In some implementations, logic 102 may be operably coupled with memory 103. Memory 103 may take various forms, such as random-access memory ("RAM"), dynamic RAM ("DRAM"), read-only memory ("ROM"), Magnetoresistive RAM ("MRAM"), resistive RAM ("RRAM"), NAND flash memory, and so forth. In some implementations, a robot controller may include, for instance, logic 102 and memory 103 of robot 100.

In some implementations, logic 102 may be operably coupled with one or more joints 104-1 to 104-N, one or more end effectors 106, and/or one or more sensors 108-1 to 108-M, *e.g.,* via one or more buses 110. As used herein, "joint" 104 of a robot may broadly refer to actuators, motors (*e.g*., servo motors), shafts, gear trains, pumps (*e.g.,* air or liquid), pistons, drives, propellers, flaps, rotors, or other components that may create and/or undergo propulsion, rotation, and/or motion. Some joints 104 may be independently controllable, although this is not required. In some instances, the more joints robot 100 has, the more degrees of freedom of movement it may have.

As used herein, "end effector" 106 may refer to a variety of tools that may be operated by robot 100 in order to accomplish various tasks. For example, some robots may be equipped with an end effector 106 that takes the form of a claw with two opposing "fingers" or "digits." Such a claw is one type of "gripper" known as an "impactive" gripper. Other types of grippers may include but are not limited to "ingressive" (*e.g*., physically penetrating an object using pins, needles, *etc*.), "astrictive" (*e.g.,* using suction or vacuum to pick up an object), or "contigutive" (*e.g.,* using surface tension, freezing or adhesive to pick up object). More generally, other types of end effectors may include but are not limited to drills, brushes, force-torque sensors, cutting tools, deburring tools, welding torches, containers, trays, and so forth. In some implementations, end effector 106 may be removable, and various types of modular end effectors may be installed onto robot 100, depending on the circumstances. Some robots, such as some telepresence robots, may not be equipped with end effectors. Instead, some telepresence robots may include displays to render visual representations of the users controlling the telepresence robots, as well as speakers and/or microphones that facilitate the telepresence robot "acting" like the user.

Sensors 108-1 to 108-M may take various forms, including but not limited to 3D laser scanners (*e.g.,* light detection and ranging, or "LIDAR") or other 3D vision sensors (*e.g.,* stereographic cameras used to perform stereo visual odometry) configured to provide depth measurements, two-dimensional cameras (*e.g.,* RGB, infrared), light sensors (*e.g.,* passive infrared), force sensors, pressure sensors, pressure wave sensors (*e.g*., microphones), proximity sensors (also referred to as "distance sensors"), depth sensors, torque sensors, barcode readers, radio frequency identification ("RFID") readers, radars, range finders, accelerometers, gyroscopes, compasses, position coordinate sensors (*e.g*., global positioning system, or "GPS"), speedometers, edge detectors, Geiger counters, and so forth. While sensors 108-1 to 108-M are depicted as being integral with robot 100, this is not meant to be limiting.

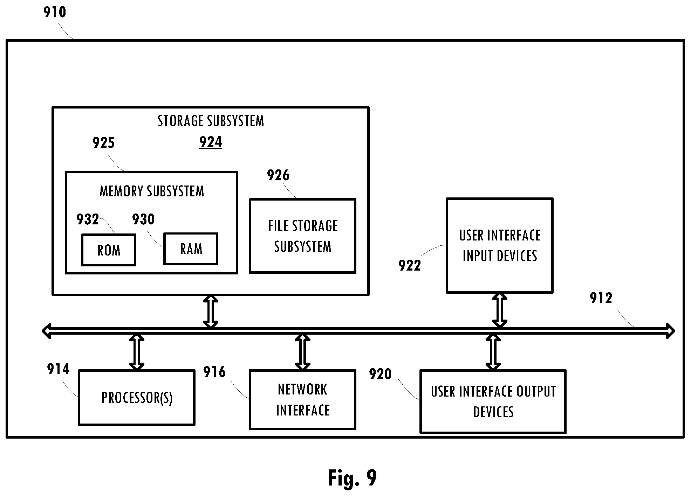

In some implementations, robotic planner system 120 and/or robot control data system 130 may include one or more computing devices cooperating to perform selected aspects of the present disclosure. An example of such a computing device is depicted schematically in Fig. 9. In some implementations, one or more of systems 120 and/or 130 may include one or more servers forming part of what is often referred to as a "cloud" infrastructure, or simply "the cloud." Alternatively, one or more components of systems 120 and/or 130 may be operated by logic 102 of robot 100.

Robotic planner system 120 may include a robotic planner process 122 that is configured to process various data using one or more generative models 124 to generate various types of output for operating a robot and/or for self-improvement of robot operation. During the aforementioned "retrieval" phase, robotic planner system 120 may retrieve and/or generate "modulation values" that may be used to modulate, attenuate, and/or otherwise condition another generative model (sometimes referred to as a "base" model), such as robot control data generative model(s) 134, or output value(s) generated from such a model, to generate a robot control signal and/or robot control data that is usable to control robot 100. In some implementations, data processed by robotic planner process 122 in this scenario may include robot execution trace(s) recorded during robotic performances of task(s) and natural language snippet(s) (*e.g.,* requests, queries, commands, *etc*.). Where applicable, this input data may include other data as well, such as video data, images, *etc.* The robot execution traces may include various values of various joints 104 and/or sensors 108 of robot 100 that are recorded while the robot performs a task, as well as values of one or more environmental variables (*e.g*., position(s) of object(s) over time).

In one non-limiting example where the robotic task is playing a racquet sport such as table tennis, the robot execution trace may include positions of a paddle used by robot 100, as well as positions of a ball recorded over time, as depicted in Fig. 3. In an "Example 22" that is depicted in Fig. 3, the modulation values that were implemented in this specific robot execution trace are a=10.0, b=9.2, c=9.2, d=9.2, e=9.2, f=9.2, g=9.2, and h=9.2 at top. The results of this modulation are shown in the remainder of the robot execution trace. For example, the landing position of a table tennis ball on a table is specified at x=0.421214, y= 1.17252, and z=0.0. The motion of the paddle and the ball at different timesteps t=0 to t=30 are set forth at bottom.

Referring back to Fig. 1, the natural language snippet that is processed by robotic planner process 122 may include a natural language request specifying one or more constraints on how robot 100 should perform a particular task. During the retrieval phase, robotic planner process 122 may process such a natural language request using generative model(s) 124 to retrieve and/or generate modulation values that, if used to modulate a downstream model and/or its output as described previously, will cause robot 100 to perform a task in a manner that is aligned with the natural language request specifying the constraint(s) on robot performance of the task.

Machine learning model(s) 124 may take various forms, including generative language model(s) such as Gemini, Flamingo, PaLM, BERT, LaMDA, Meena, and/or any other single-modal or multimodal generative model, such as any other generative model that is encoder-only based, decoder-only based, sequence-to-sequence based and that optionally includes an attention mechanism or other memory, diffusion model(s), *etc.* Generative models may have hundreds of millions, or even hundreds of billions of parameters. In some implementations, generative models may include multi-modal models such as a VLM and/or a VQA model, which can have any of the aforementioned architectures, and which can be used to process multiple modalities of data, particularly images and text, and/or images and audio for example, to generate one or more modalities of output.

An analysis engine 126 may be configured to leverage generative model(s) 124 to analyze robot execution traces and/or natural language summaries of robot execution traces to determine relationships and/or patterns between modulation values and details of how robots interact with an environment. These relationships and/or patterns may then be processed, *e.g.,* by a synthesis engine 128 using generative model(s) 122, to synthesize modulation values that are more closely aligned with goal(s) or constraint(s) specified in natural language requests provided by humans.

For example, in some implementations, analysis engine 126 may be configured to assemble, as a "summary" input prompt, data indicative of a plurality of robot execution traces recorded during robotic performance of a task. As noted previously, each robot execution trace may include a corresponding set of reference modulation values implemented during robotic performance of the task. Analysis engine 126 may be configured to process the summary input prompt using generative model(s) 122 to generate summary generative model output that includes a plurality of natural language summaries of the plurality of robot execution traces. In various implementations, each natural language summary may describe details of robotic performance of the task, such as where a table tennis ball landed on the table, the trajectory of the table tennis ball through the air, *etc.* Each natural language summary may also include, or may be usable to retrieve, a corresponding set of reference modulation values that were implemented during recording of the underlying robot execution trace.

Analysis engine 126 may then be configured to assemble, as an "analysis" input prompt, the plurality of natural language summaries and corresponding sets of reference modulation values. Analysis engine 126 may process the analysis input prompt using generative model(s) 124 to generate "analysis" generative output. The analysis generative output may include data indicative of one or more relationships between at least some of the reference modulation values and the details described in one or more of the natural language summaries. Below is an example of an analysis input prompt that analysis engine 126 might assemble:
Objective: Hit the ball to the right side!

Now execute the following steps and make sure to describe your actions at every step.

Step 1: From the table above give me the parameters that are closest to fulfilling the above objective.

Step 2: Take these parameters and the summary table and analyze the effect of a and b on the landing positions and the paddle motion. Let's think step by step!

Below is an example of the type of analysis output analysis engine 126 might generate based on such an analysis prompt, assuming the Example 22 of Fig. 3 were included in the analysis input prompt.

Analyzing example 22 with parameters [10.0, 9.2], we see the ball landed on the right side. Comparing this to other successful examples (2, 21, 24, 26 and 27), we see a pattern: a lower value for 'b' correlates with a higher x landing position. This suggests 'b' affects the ball's lateral movement. The paddle motion seems consistent across examples, moving forward and slightly right. 'a' might influence the paddle's forward speed or the ball's initial velocity which indirectly affects the landing position based on the timing with the ball's lateral movement. This needs further analysis.

A synthesis engine 128 may be configured to assemble, as a "synthesis" input prompt, the analysis generative output, a natural language request, and/or a request to generate one or more sets of synthetic modulation values. If present, the natural language request may specify one or more constraints on robotic performance of the task. Synthesis engine 128 may then process the synthesis input prompt using generative model(s) 122 to generate synthesis generative output that includes one or more sets of synthetic modulation values. For example, if only modulation values a and b are to be synthesized, synthesis engine 128 might generate generative output that includes, among other things, proposed values for a and b that will encourage robot 100 to act so that the constraint(s) specified in the natural language request are more closely adhered to.

Robot control data system 130 may be configured to generate robot control data that is operable to control robot 100, *e.g.,* by transmitting robot control data to robot 100. "Robot control data" may include, for instance, low-level actuator commands (also referred to as "joint velocities," and may include torque commands) that directly control the actuators/joints 104-1 to 104-N of the robot, cartesian commands that specify direction(s) for an end effector 106, a target robot pose, code that specifies reward functions that a motion controller can optimize (*e.g*., using techniques such as receding horizon optimization) to find optimal low-level actuator commands, selected predefined robot primitives, and so forth. In some cases, robot logic 102 may be configured to convert between joint commands and Cartesian commands, *e.g.,* using forward and/or inverse kinematics.

Robot control data system 130 may include a robot control data generation process 132, also referred to as a "lower level controller," that processes various data, such as images, video, modulation values provided by robotic planner system 120, *etc.,* to generate robot control data. In some implementations, robot control data generation process 132 may use one or more robot control data machine learning models 134 to generate robot control data. Robot control data machine learning model(s) 134 may take various forms, similar to model(s) 124, such as Gemini, Flamingo, PaLM, BERT, LaMDA, Meena, and/or any other generative language model, such as any other generative model that is encoder-only based, decoder-only based, sequence-to-sequence based and that optionally includes an attention mechanism or other memory. Non-limiting examples of robot control data machine learning models that may be used are described in "RT-1: Robotics Transformer for Real-World Control at Scale" (arXiv:2212.06817) and "RT-2: Vision-Language-Action Models Transfer Web Knowledge to Robotic Control" (arXiv: 2307.15818).

Feedback engine 136 may obtain feedback, *e.g.,* from human(s) (*e.g*., 140) operating a client device 152 and/or from outcomes of robot 100 being operated using robot control data generated by robot control data generation process 132. Feedback engine 136 may provide feedback data to a training engine 138. Training engine 138 may be configured to train and/or fine-tune model(s) 134 based on feedback generated by feedback engine 136. In some implementations, training engine 138 and/or training engine 128 may jointly train model(s) 124 employed by robotic planner process 122 and model(s) 134 employed by robot control generation process 132, *e.g.,* based on an outcome of robot 100 attempting to perform a task in a manner specified by constraints contained in a natural language request.

Fig. 2 depicts a non-limiting example of a robot 200 in the form of a robot arm. An end effector 206 in the form of a gripper claw is removably attached to a sixth joint 204-6 of robot 200. In this example, six joints 204-1 to 204-6 are indicated. However, this is not meant to be limiting, and robots may have any number of joints. In some implementations, robot 200 may be mobile, e.g., by virtue of a wheeled base 265 or other locomotive mechanism. Robot 200 is depicted in Fig. 2 in a particular selected configuration or "pose."

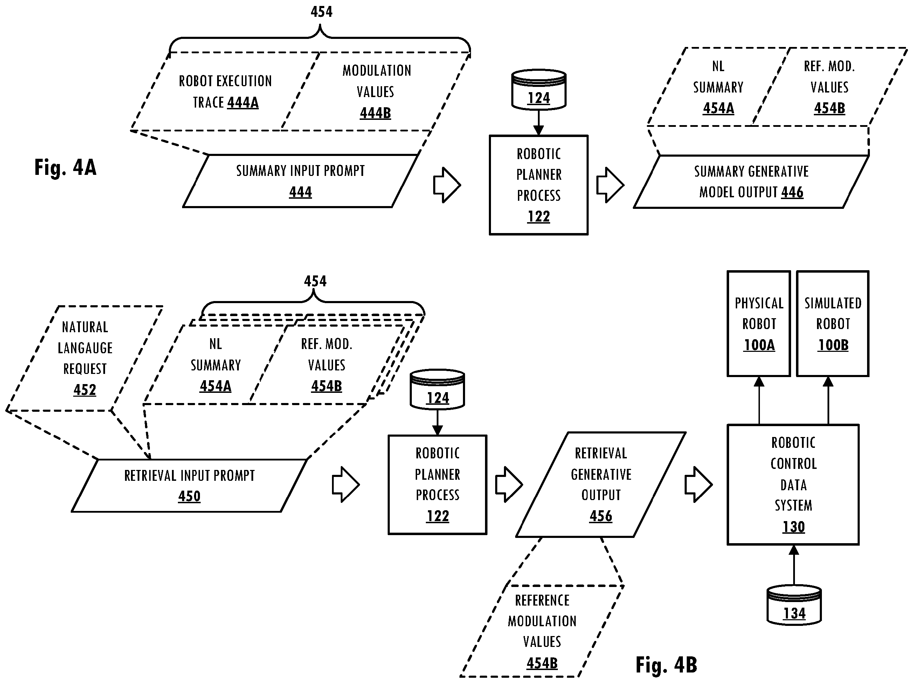

Fig. 4A schematically depicts an example of how various components depicted in Fig. 1 may cooperate to carry out selected aspects of the present disclosure during the summary phase. Starting at left, a summary input prompt 444 may be assembled, *e.g.,* by robotic planner process 122. Summary input prompt 444 may include data indicative of one or more robot execution traces 444A and one or more corresponding modulation values 444B that were implemented during respective execution of a task by a robot.

Summary input prompt 444 may be processed, *e.g.,* by robotic planner process 122 using one or more generative models 124, to generate summary generative model output 446. Summary generative model output 446 may include, for instance, one or more natural language summaries 454A that describe, in natural language, details of the robot execution trace(s) 444A. Additionally, summary generative model output 446 may include (as shown in Fig. 4A), or at least be usable to retrieve, one or more corresponding reference modulation values 454B (which may share various characteristics with modulation values 444B).

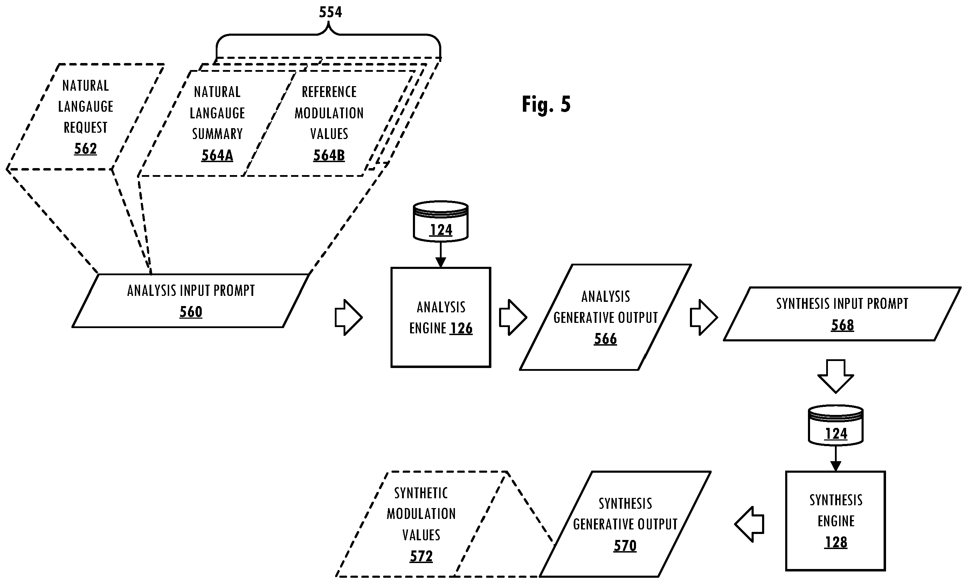

Natural language summaries 454A of robot execution traces 444A may be used, *e.g.,* by robotic planner process 122, to retrieve corresponding reference modulation values 454B for various purposes. Fig. 4B depicts how they may be used during a retrieval phase to influence how a robot performs a task in real time. Fig. 5 depicts how they may be used during a self-improvement process that includes analysis and synthesis phases.

Fig. 4B schematically depicts an example of how various components depicted in Fig. 1 may cooperate to carry out selected aspects of the present disclosure during the retrieval phase. Starting at left, a retrieval input prompt 450 may be assembled, *e.g.,* by robotic planner process 122, that includes a natural language request 452 and one or more robot execution examples 454. Each robot execution example 454 may include a natural language summary 454A of an underlying robot execution trace (*e.g.,* see Fig. 3) and modulation values (*e.g.,* a=10.0, b=9.2, c=9.2, d=9.2, e=9.2, f=9.2, g=9.2, and h=9.2 in Fig. 3). In various implementations, one or more of the robot execution examples 454 may be generated from robot execution traces that were actually recorded from real or simulated robot performance, and hence, the reference modulation values 454B may be values that were actually used to modulate generation of robot control data. Additionally or alternatively, one or more of the robot execution examples 454 may include synthetic modulation values generated by synthesis engine 128 using one or more generative models 122.

Using one or more generative models 124, robotic planner process 122 may process retrieval input prompt 450 to generate retrieval generative output 456. As shown in Fig. 4B, retrieval generative output 456 may include, among other things, reference modulation value(s) 454B associated with the robot execution example 454 having the natural language summary 454A that was most similar to (*e.g.,* most closely aligned with) natural language request 452. Intuitively, if natural language request 452 specified a particular way a robot task was to be performed (*e.g.,* "hit the ball towards the back right corner of the table"), then the natural language summary selected/identified by robotic planner process 122 may be the one in which the description most closely matches that goal (*e.g*., where a ball was hit towards the back right corner of the table), and the accompanying reference modulation values 454B may be those that were implemented during that underlying robot execution trace.

The retrieval generative output 456, and particularly the corresponding reference modulation values 454B, may be provided to robot control data generation process 132. Robot control data generation process 132 may then process these values, *e.g.,* using one or more robot control data generative models 134, to generate robot control data that can be used to operate a physical robot 100A and/or a simulated robot 100B that is simulated in a virtual environment.

Fig. 5 schematically depicts an example of how various components depicted in Fig. 1 may cooperate to carry out selected aspects of the present disclosure during the analysis and synthesis phases. Starting at left, an analysis input prompt 560 may assembled, *e.g.,* by analysis engine 126, to include one or more robot execution examples 564. Similar to Figs. 4A-B, in Fig. 5, each robot execution example 564 may include a natural language summary 564A and one or more corresponding reference modulation values 564B. In some implementations, analysis input prompt 560 may also include a natural language request 562, although this is not required.

Analysis engine 126 may process analysis input prompt 560 using generative model(s) 124 to generate analysis generative output 566. As noted previously, the analysis generative output 566 may include, for instance, data indicative of one or more relationships between at least some of the reference modulation values 564B and the details described in one or more of the natural language summaries 564A.

Data indicative of the analysis generative output 566 may then be assembled, *e.g.,* by synthesis engine 128, into a synthesis input prompt 568. Synthesis input prompt 568 may be processed by synthesis engine 128 to generate synthesis generative output 570. Synthesis generative output 570 may include, among other things, one or more synthetic modulation values 572. These synthetic modulation values 572 may subsequently be available for retrieval during the retrieval process depicted in Fig. 4B, and/or during a subsequent iteration where a single input prompt includes all data that otherwise might be distributed across prompts 444, 450, 560, and 568. Additionally or alternatively, in some implementations, some aspects of Fig. 5 may be incorporated into the retrieval phase depicted in Fig. 4B, such that synthetic modulation values are available in addition to or instead of the reference modulation values recorded during prior robot operation.

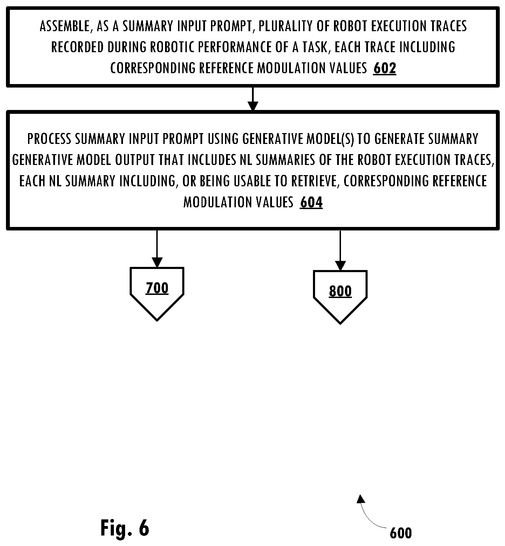

Referring now to Fig. 6, an example method 600 of practicing selected aspects of the present disclosure to summarize robot execution traces is described. For convenience, the operations of the flowchart are described with reference to a system that performs the operations. This system may include various components of various computer systems. Moreover, while operations of method 600 are shown in a particular order, this is not meant to be limiting. One or more operations may be reordered, omitted or added. At block 602, the system, *e.g.,* by way of robotic planner process 122, may assemble, as a summary input prompt 444, data indicative of a plurality of robot execution traces 444A recorded during robotic performance of a task. Each robot execution trace 444A may be paired and/or include with a corresponding set of modulation values 444B that were implemented during robotic performance of the task.

At block 604, the system, *e.g.,* by way of robotic planner process 122, may process the summary input prompt 444 using one or more generative models 124 to generate summary generative model output 446 that includes a plurality of natural language summaries 454A of the plurality of robot execution traces. As noted elsewhere herein, each natural language summary of the plurality of natural language summaries may describe details of robotic performance of the task, such as the trajectory of a table tennis ball, a general location on a table where the table tennis ball landed (*e.g.,* "back right," "front center," *etc*.), and so forth. Each natural language summary 454A may also include, or be usable to retrieve, a corresponding set of reference modulation values 454B that were implemented and recorded in the underlying robot execution trace.

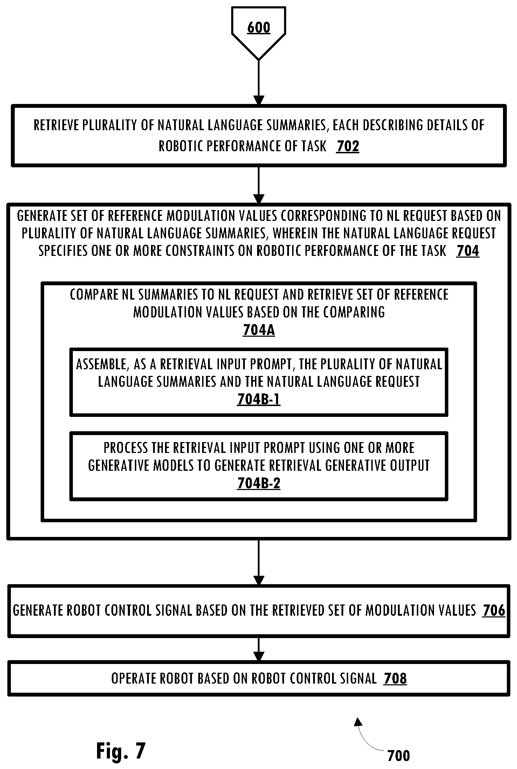

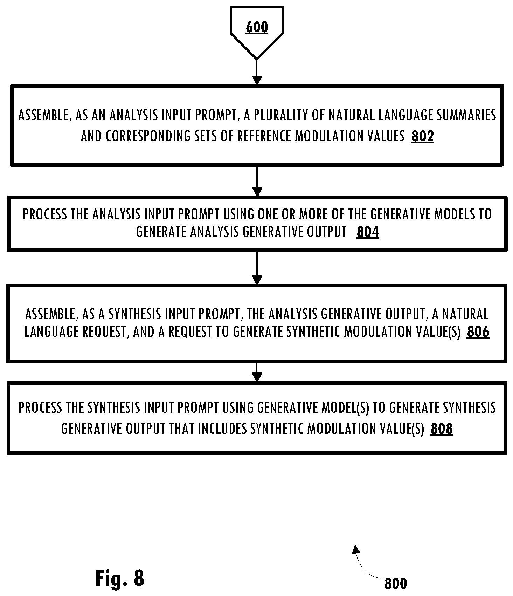

Once the operations of method 600 have been performed and the natural language summaries generated, various courses of action may be possible. For example, and as depicted in Fig. 6, the natural language summaries may be used in method 700 of Fig. 7, which relates to the retrieval phase, and in method 800 of Fig. 8, which relates to the analysis and synthesis phases. And in other implementations, the operations of Figs. 6, 7, and 8 may be performed during a single iteration of generative model(s) 124 using a single input prompt that includes data described elsewhere herein as being included in input prompts 444, 450, 560, and 568. During each iteration, the single input prompt may be augmented, *e.g.,* with new synthetic modulation values that cause robot 100 to behave more closely in alignment with human goals.

Referring now to Fig. 7, an example method 700 of practicing selected aspects of the retrieval phase is described. For convenience, the operations of the flowchart are described with reference to a system that performs the operations. This system may include various components of various computer systems. Moreover, while operations of method 700 are shown in a particular order, this is not meant to be limiting. One or more operations may be reordered, omitted or added.

At block 702, the system, *e.g.,* by way of robotic planner process 122, may retrieve a plurality of natural language summaries. As noted previously, each of the natural language summaries describes details of robotic performance of a task. Moreover, each natural language summary may include, or be usable to retrieve, a corresponding set of reference modulation values. As indicated by the block 600, in some implementations, the operations of method 700 may be performed sometime after the operations of method 600. More generally, there is no requirement that the operations of methods 600 and 700 be performed during the same time period, by the same entity, or both be performed at all. For example, natural language summaries of robot execution traces could be generated manually, *e.g.,* by humans, foregoing method 600 but allowing operation of method 700 to proceed. Put another way, while complementary, the operations of methods 600 and 700 can be performed independently of one another.

At block 704, the system, *e.g.,* by way of robotic planner process 122, may generate a set of reference modulation values 454B corresponding to a natural language request 452 based on the plurality of natural language summaries 454A. As noted elsewhere herein. the natural language request may specify one or more constraints on robotic performance of the task. In some implementations, the operations of block 704 may include, at block 704A, comparing the natural language summaries 454A to the natural language request 452 and retrieving the set of reference modulation values based on the comparing. In some implementations, the comparison/retrieval performed at block 704A may include, at block 704B-1, assembling, as a retrieval input prompt 450, the plurality of natural language summaries and the natural language request. Additionally, the comparison performed at block 704A may include, at block 704B-2, processing the retrieval input prompt using one or more generative models 124 to generate retrieval generative output 456. The retrieval generative output may include, or be usable to retrieve, a set of reference modulation values 454B. In other implementations, the set of reference modulation values may be synthesized on the fly, *e.g.,* as depicted in blocks 806-808 of Fig. 8.

At block 706, the system, *e.g.,* by way of robot control data generation process 132, may use one or more robot control data generative models 134 to generate a robot control signal based on the generated set of modulation values. In various implementations, the control signal may be generated by modulating/conditioning a robot control data machine learning model *(e.g.* 134) using the retrieved set of modulation values to generate robot control data. As noted elsewhere herein, in some implementations, the robot control data may include a plurality of joint velocities. For instance, robotic planner system 120 may provide the set of modulation values to robot control data system 130. Robot control data generation process 132 may modulate application of robot control data generative model(s) 134 (*e.g.,* modulate the input thereto, intermediate layer(s), the output generated therefrom, *etc*.) based on the received modulation values. At optional block 708, in some implementations, the system may operate a robot 100 based on the robot control signal.

Referring now to Fig. 8, an example method 800 of practicing selected aspects of the analysis and synthesis phases is described. For convenience, the operations of the flowchart are described with reference to a system that performs the operations. This system may include various components of various computer systems. Moreover, while operations of method 800 are shown in a particular order, this is not meant to be limiting. One or more operations may be reordered, omitted or added.

At block 802, the system, *e.g.,* by way of analysis engine 126, may assemble, as an analysis input prompt 560, a plurality of natural language summaries 564A and corresponding sets of reference modulation values 564B, and in some cases, a natural language request 562. At block 804, the system, *e.g.,* by way of analysis engine 126, may process the analysis input prompt using one or more of the generative models 124 to generate analysis generative output 566. As noted elsewhere herein, the analysis generative output may include data indicative of one or more relationships between at least some of the reference modulation values and the details described in one or more of the natural language summaries.

At block 806, the system, *e.g.,* by way of synthesis engine 128, may assemble, as a synthesis input prompt 568, the analysis generative output 566, a natural language request 562, and a request to generate one or more sets of synthetic modulation values. As noted elsewhere herein, the natural language request 562 may specify one or more constraints on robotic performance of a task. At block 808, the system, *e.g.,* by way of synthesis engine 128, may process the synthesis input prompt 568 using one or more of the generative models 124 to generate synthesis generative output 570. The synthesis generative output 570 may include one or more sets of synthetic modulation values 572. These synthetic modulation values 572 may then be available, *e.g.,* to robotic planner process 122, as reference modulation values that can be assembled into future retrieval input prompts 450. In other implementations, at least some aspects of blocks 804-806 may be performed as part of the retrieval phase depicted in Figs. 4B and 7, so that synthetic modulation values are generated on the fly for immediate use.

While depicted as separately occurring phases in Figs. 4A, 4B, and 5, as well as the methods depicted in Figs. 6-8, it should be understood that the summary, retrieval, analysis, and synthesis phases described herein may not be performed at different times. In some implementations, a single input prompt may be assembled that includes instructions for all three phases. Put another way, the single input prompt may include data described above as being incorporated into the summary input prompt 444, retrieval input prompt 450, analysis input prompt 560, and synthesis input prompt 568. This single input prompt may be processed by robotic planner process 122 using generative model(s) 124 across multiple iterations. During each iteration, the robot's behavior may improve slightly. For instance, during each new iteration, new data (*e.g*., synthetic modulation values) generated during a previous iteration may be appended to the new input prompt, *e.g.,* as an additional robot execution trace that is summarized/analyzed along with the previously-available robot execution traces. The following input prompt includes aspects of the summarization, retrieval, analysis, and synthesis input prompts described previously, and may be iteratively processed using generative model(s) 124. At each iteration, new data (*e.g*., new synthetic modulation values) may be appended to the input prompt.

### <examples of robot performance of a task, such as robot execution traces and/or previously-generated synthetic modulation values, would be included here>

### Domain Description:

The above examples hold the landing positions of a table tennis ball on the table. You are provided with the motion of the paddle and ball during each example. Regarding the size and dimensions of the table tennis table: the x dimension (along width) is in range [-0.76, 0.76], the y dimension (depth) is in range [-1.37,1.37] and z (height) is in range [0.0, 2.0]. Positive x values are on the right side of the table tennis table, whereas negative x values are on the left side.

### Objective:

Hit the ball as close as possible to the top edge of the table!

Step 1: Create a table that summarizes each example. The summary should be precise and provide evidence. The table should also hold the corresponding parameter values a,b,c,d,e,f,g,h. The parameters control a robot which generated these examples.

Step 2: From the table above give me the parameters that are closest to fulfilling the above objective.

Step 3: Take these parameters and the summary table and analyze the effect of the parameters a,b,c,d,e,f,g,h. Let's think step by step!

Step 4: Based on this analysis, propose a new set of values for the parameters which will bring us closer to the objective than any of the previous examples. Avoid parameters that hit the ball outside of the table. Use exactly the following format and do not write anything else:

As noted elsewhere herein, techniques described herein are applicable in other contexts besides table tennis. As one example, the techniques may be applied in a manufacturing or assembly setting to control a robotic arm performing a delicate task, such as applying adhesive to a component. In such a scenario, a collection of prior robot execution traces would be available. Each trace would include the specific modulation values used to control the robotic arm's movements and the resulting adhesive application (*e.g*., bead thickness, path accuracy, start/stop points). These traces would be processed to generate natural language summaries, for instance: "This application used modulation values [X, Y, Z] and resulted in a slightly thicker bead of adhesive along the top edge."

An operator could then provide a natural language request, such as "apply a thinner line of adhesive around the curved corner." The system would compare this request to the plurality of natural language summaries to retrieve the reference modulation values from the most semantically similar past performance. For instance, it might identify a summary stating, "A thinner bead was achieved at the corner using modulation values [X', Y', Z']."

These retrieved modulation values would then be used to generate a new robot control signal. This signal would modulate the base policy of the robotic arm, for example, by attenuating the joint velocities controlling the end-effector (the adhesive nozzle), to produce a motion that more closely matches the operator's natural language request. Furthermore, through analysis and synthesis, the system could propose a novel set of synthetic modulation values to achieve an even thinner bead than any of the past examples.

Another illustrative example involves the application of these techniques to a self-driving vehicle, for instance, one navigating a complex urban environment like a parking garage. In this context, the task could be to execute a specific maneuver, such as "park in a tight spot between two other cars." The base control policy for the self-driving vehicle can handle general driving, but might perform such maneuvers with generic, conservative parameters.

A collection of past parking maneuvers would exist as robot execution traces. Each trace would contain detailed sensor data (*e.g.,* LIDAR, camera feeds), vehicle state information (*e.g.,* steering angle, wheel speed, distance to obstacles), and the set of reference modulation values that were used. These modulation values might adjust parameters like turn radius aggression, approach speed, or proximity sensor thresholds. These raw traces would be processed to generate corresponding natural language summaries, such as: "Using modulation values [A, B, C], the vehicle executed a slow, wide turn and parked centrally but far from the curb."

A user or a system operator could then issue a natural language request, for instance, "Park a bit more aggressively to get closer to the pillar on the left." The system would process this request by comparing it against its library of natural language summaries. It would retrieve the reference modulation values from a prior performance that most closely matches the new constraint, such as a summary that says, "With values [A', B', C'], the vehicle performed a tighter turn, parking within 10 centimeters of the left-side pillar."

These retrieved modulation values are then used to generate a new robot control signal. This signal adjusts the vehicle's base driving policy, for example by modifying the steering angle outputs or target velocity profiles, to execute the parking maneuver in a manner that aligns with the operator's request for a more aggressive, closer park. The analysis and synthesis phases could further be used to generate novel synthetic modulation values that might achieve an even better performance-for example, a faster and closer park than any previously recorded example-allowing the vehicle's maneuvering capabilities to be refined over time based on semantic feedback.

Fig. 9 is a block diagram of an example computer system 910. Computer system 910 typically includes at least one processor 914 which communicates with a number of peripheral devices via a bus subsystem 912. These peripheral devices may include a storage subsystem 924, including, for example, a memory subsystem 925 and a file storage subsystem 926, user interface output devices 920, user interface input devices 922, and a network interface subsystem 916. The input and output devices allow user interaction with computer system 910. Network interface subsystem 916 provides an interface to outside networks and is coupled to corresponding interface devices in other computer systems.

User interface input devices 922 may include a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computer system 910 or onto a communication network.

User interface output devices 920 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 910 to the user or to another machine or computer system.

Storage subsystem 924 stores programming and data constructs that provide the functionality of some or all of the modules described herein. For example, the storage subsystem 924 may include the logic to perform selected aspects of method 600, 700, and/or 800, and/or to implement one or more aspects of robot 100 or systems 120 or 130. Memory 925 used in the storage subsystem 924 can include a number of memories including a main random-access memory (RAM) 930 for storage of instructions and data during program execution and a read only memory (ROM) 932 in which fixed instructions are stored. A file storage subsystem 926 can provide persistent storage for program and data files, and may include a hard disk drive, a CD-ROM drive, an optical drive, or removable media cartridges. Modules implementing the functionality of certain implementations may be stored by file storage subsystem 926 in the storage subsystem 924, or in other machines accessible by the processor(s) 914.

Bus subsystem 912 provides a mechanism for letting the various components and subsystems of computer system 910 communicate with each other as intended. Although bus subsystem 912 is shown schematically as a single bus, alternative implementations of the bus subsystem may use multiple buses.

Computer system 910 can be of varying types including a workstation, server, computing cluster, blade server, server farm, smart phone, smart watch, smart glasses, set top box, tablet computer, laptop, or any other data processing system or computing device. Due to the ever-changing nature of computers and networks, the description of computer system 910 depicted in Fig. 9 is intended as a specific example for purposes of illustrating some implementations. Many other configurations of computer system 910 are possible having more or fewer components than the computer system depicted in Fig. 9.

In some examples, the machine learning models described herein can be used for controlling a robotic device or a simulated robotic device.

The input to the machine learning model may comprise a natural language description of a task to be performed by the robotic device. For example the input may comprise speech or text data. Speech data may be captured by a microphone on the robotic device or on a separate device for example. Text data may be entered by a user through a keyboard or touchscreen on the robotic device or on a separate device for example, or may be generated from speech data captured by a microphone on the robotic device or on a separate device for example (for example using automatic speech recognition techniques). Thus the input may include textual or spoken instructions provided to the robotic device by a third-party (*e.g*., an operator). In particular, a user may control the robotic device using a client device such as a tablet computer or smart phone for example.

The input may additionally or alternatively comprise sensor data generated by one or more sensors on the robotic device or in the environment of the robotic device. For example, the input may comprise image data captured by one or more vision sensors such as one or more cameras (*e.g*., RGB, infrared). The input may comprise a three-dimensional (3D) digital representation of the environment captured by one or more sensors such as LIDAR sensors or depth cameras, for example point cloud data generated using a light detection and ranging (LIDAR) sensor. For example, the input may comprise sensor data from a distance or position sensor, or from an actuator. The input may include data from sensors of the agent or data from sensors that are located separately from the agent in the environment.

The input may include data characterizing the current state of the robot, *e.g.,* one or more of: joint position, joint velocity, joint force, torque or acceleration, *e.g.,* gravity-compensated torque feedback, and global or relative pose of an item held by the robot. The input data may be defined in 1, 2 or 3 dimensions, and may be absolute and/or relative data. The input may also include, for example, sensed electronic signals such as motor current or a temperature signal. The input may include data captured from *e.g.* one or more force sensors, pressure sensors, pressure wave sensors (*e.g*., microphones), proximity sensors (also referred to as "distance sensors"), depth sensors, torque sensors, barcode readers, radio frequency identification ("RFID") readers, radars, range finders, accelerometers, gyroscopes, compasses, position coordinate sensors (*e.g*., global positioning system, or "GPS"), speedometers, edge detectors, Geiger counters, and so forth.

The output of the machine learning model may comprise data representing one or more tasks to be performed by the robotic device in order to perform the task.

For instance, the output may comprise natural language, for example text or speech, that describes steps or sub-tasks for completing a task. The output may define one or more low-level skills, *e.g.* from a vocabulary of previously learnt skills.

The output may comprise robot control data that is usable to control a robot to complete the task, for example. The robot control data may include, for instance, low-level actuator commands that directly control actuators of the robotic device, cartesian commands that specify direction(s) for an end effector of the robotic device, a target robot pose, selected predefined robot primitives, and so forth. As an illustration, the output may comprise action tokens, that can be converted into a control signal for the robotic device. For example, the action tokens may represent variables for arm movement (such as one or more of: x, y, z, roll, pitch, yaw, gripper opening), variables for base movement (such as one or more of: x, y, yaw), and variables to switch between modes (such as a variable to switch between controlling arm, controlling base, or terminating the episode). Each action dimension may be discretized, for example into 256 bins.

The output may comprise reward parameters that can be optimized by a low-level motion controller to determine low-level actuator commands.

The output may comprise robot policy code expressing functions or feedback loops that process perception outputs and parameterize control primitive APIs. For example, the output may comprise API calls to generate policy code.

The output may represent candidate robot or end effector trajectories, higher-level control commands, position, velocity, or force/torque/acceleration data for one or more joints, or electronic control data such as motor control data for example.

In various implementations, the robot may be simulated in a virtual environment. The input may comprise data representing the virtual environment in which the simulated robot operates, for example image data representing the virtual environment.

The robotic device may take various forms, including but not limited to a telepresence robot, a robotic arm, a bi-arm robotic device, a humanoid robot or other bipedal robot, a quadruped robot such as a "robot dog", a wheeled robot, an aquatic robot, and so forth. The robotic device may include control logic. Control logic may take various forms, such as a real time controller, one or more processors, one or more field-programmable gate arrays ("FPGA"), one or more application-specific integrated circuits ("ASIC"), and so forth. In some implementations, the logic may be operably coupled with memory. Memory may take various forms, such as random-access memory ("RAM"), dynamic RAM ("DRAM"), read-only memory ("ROM"), Magnetoresistive RAM ("MRAM"), resistive RAM ("RRAM"), NAND flash memory, and so forth. In some implementations, the control logic may be operably coupled with one or more joints, one or more end effectors, and/or one or more sensors. A joint of a robot may broadly refer to actuators, motors (*e.g.,* servo motors), shafts, gear trains, pumps (*e.g.,* air or liquid), pistons, drives, propellers, flaps, rotors, or other components that may create and/or undergo propulsion, rotation, and/or motion.

An end effector may broadly refer to a variety of tools that may be operated by the robotic device in order to accomplish various tasks. For example, an end effector may take the form of a claw with two opposing "fingers" or "digits." Such a claw is one type of "gripper" known as an "impactive" gripper. The gripper may have more than two digits, for example, three, four or five digits. Other types of grippers may include but are not limited to "ingressive" (*e.g.,* physically penetrating an object using pins, needles, *etc.*), "astrictive" (*e.g.,* using suction or vacuum to pick up an object), or "contigutive" (*e.g*., using surface tension, freezing or adhesive to pick up object). More generally, other types of end effectors may include but are not limited to drills, brushes, force-torque sensors, cutting tools, deburring tools, welding torches, containers, trays, and so forth. In some implementations, end effector may be removable, and various types of modular end effectors may be installed onto robot. Some robots, such as some telepresence robots, may not be equipped with end effectors.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example and that, within the scope of the appended claims and equivalents thereto, implementations may be practiced otherwise than as specifically described and claimed.

## Claims

1. A method implemented using one or more processors, comprising:
retrieving a plurality of natural language summaries, wherein each of the natural language summaries describes details of robotic performance of a task, and wherein each natural language summary includes, or is usable to retrieve, a corresponding set of reference modulation values;
generating a set of modulation values corresponding to a natural language request based on the plurality of natural language summaries, wherein the natural language request specifies one or more constraints on robotic performance of the task; and
generating a robot control signal based on the generated set of modulation values.

2. The method of claim 1, wherein generating the set of modulation values corresponding to the natural language request comprises:
comparing the natural language summaries to the natural language request; and
based on the comparing, retrieving one of the sets of reference modulation values.

3. The method of claim 2, wherein the comparing comprises:
assembling, as a retrieval input prompt, the plurality of natural language summaries and the natural language request; and
processing the retrieval input prompt using one or more generative models to generate retrieval generative output, wherein the retrieval generative output includes, or is usable to retrieve, the set of reference modulation values.

4. The method of any one of the preceding claims, wherein the control signal is generated by modulating output generated using a robot control data machine learning model using the retrieved set of modulation values to generate robot control data.

5. The method of any one of the preceding claims, wherein the robot control signal is generated by attenuating one or more joint velocities generated by a robot control data machine learning model based on the modulation values.

6. The method of any one of the preceding claims, wherein the robot control signal comprises a plurality of joint velocities.

7. The method of any one of the preceding claims, wherein the sets of reference modulation values comprise sets of residual policy parameters.

8. The method of any one of the preceding claims, wherein the set of reference modulation values corresponds to the natural language summary of the plurality of natural language summaries that is most semantically similar to the natural language request.

9. The method of any one of the preceding claims, wherein the set of reference modulation values corresponds to the natural language summary of the plurality of natural language summaries that is most syntactically similar to the natural language request.

10. The method of any one of the preceding claims, wherein one or more of the natural language summaries describes a robot execution trace that was recorded during robotic performance of the task.

11. The method of any one of the preceding claims, wherein one or more of the sets of reference modulation values were implemented and recorded during robotic performance of the task.

12. The method of any one of the preceding claims, wherein one or more of the sets of reference modulation values comprise synthetic modulation values that were generated using one or more of the generative models.

13. The method of any one of the preceding claims, wherein the generating comprises generating the set of reference modulation values using one or more of the generative models.

14. The method of any one of the preceding claims, further comprising operating a robot based on the robot control signal.

15. The method of claim 14, wherein the robot is a physical robot.
